# EUROPEAN PATENT SPECIFICATION

(11) **EP 0 786 781 B1**
(45) Date of publication and mention of the grant of the patent: **23.06.1999**
(21) Application number: 96203368.4
(22) Date of filing: 28.11.1996
(51) Int. Cl.: G21C 3/322

(54) **Fuel assembly for a boiling water reactor**
Kernbrennstoffbundel für einen Siedewasserreaktor
Assemblage combustible d'un réacteur à eau bouillante

(30) Priority: 25.01.1996 SE 9600270
(43) Date of publication of application: 30.07.1997
(73) Proprietor: ABB ATOM AB, 721 63 Västeras (SE)
(72) Inventor: Arnaldo, Mingo, 722 31 Västeras (SE); Olov, Nylund, 720 17 Västeras (SE); Bertil, Schölin, 722 18 Västeras (SE)
(74) Representative: Dahlstrand, Björn

(56) References cited:
- EP-A- 0 319 744
- US-A- 5 229 068

## Description

### TECHNICAL FIELD

The present invention relates to a fuel assembly for a boiling water reactor comprising a first and a second group of fuel rods. The fuel rods in the first group are full-length rods and have a constant cross-section area in the axial direction. The fuel rods in the second group are either part-length rods or full-length rods with a cross-section area which is considerably smaller in the upper part of the fuel rod than in the lower part thereof.

### BACKGROUND ART

A core in a boiling water nuclear reactor comprises a plurality of vertically arranged fuel assemblies. A fuel assembly comprises one or more fuel bundles. A fuel bundle comprises a plurality of vertical fuel rods arranged between a bottom tie plate and a top tie plate. The fuel rods are retained and fixed by a number of spacers arranged in spaced relationship to each other along the bundle. The fuel rods contain a column of circularly cylindrical pellets of a nuclear fuel arranged in a cladding tube. A small number of so-called supporting fuel rods retain the fuel bundle and are fixed to the bottom tie plate and the top tie plate. The fuel bundles or the fuel bundle are/is surrounded by a fuel channel which is normally designed with a square cross section.

The core is immersed into water which serves both as coolant and as neutron moderator. During operation, the water flows from below and upwards through the fuel assembly, part of the water thus changing into steam. The percentage of steam is highest in the upper part of the fuel assembly. Hereinafter, coolant means the water and the steam which flow through the fuel assembly. Because of the high percentage of the steam, the pressure drop is higher in the upper part of the fuel assembly than in the lower part thereof. The greater the difference in pressure drop between the upper and lower parts of the fuel assembly, the greater is the risk of the core becoming unstable. To give the fuel assembly good stability properties, a low pressure drop in the upper part of the fuel assembly is aimed at.

When the percentage of steam rises, the neutron moderation deteriorates since steam is inferior to water as moderator. The reactivity of the reactor depends on the ratio between fuel and moderator. To improve the reactivity, the water/steam ratio in the upper part of the fuel assembly must be increased. This can be done either by increasing the quantity of moderator or reducing the quantity of fuel in the upper part of the assembly, or by a combination thereof.

One known solution to the above problem is to replace some of the fuel rods with part-length fuel rods. Part-length fuel rods have a shorter axial extent than traditional full-length fuel rods. US-A- 5,229,068 discloses a fuel assembly in which the majority of the fuel rods are full-length rods, that is, they extend from the bottom tie plate to the top tie plate, and a smaller number of fuel rods are part-length rods, that is, they extend from the bottom tie plate but terminate somewhat below the top tie plate.

Another solution is shown in Swedish patent application No. 9501936-0 (corresponding to PCT/SE96/00454). This application shows a fuel assembly which comprises two different groups of fuel rods. All the fuel rods are full-length rods, but the second group of fuel rods have a shorter active length than the first group. The fuel rods in the first group have a constant cross-section area in the longitudinal direction, whereas the fuel rods in the second group comprise an upper part with a relatively smaller cross-section area which is completely without fuel and a lower part with a relatively larger cross-section area which comprises fuel.

One problem with the first-mentioned solution is that it has proved that the risk of dryout increases for those fuel rods which surround the part-length fuel rods. A certain increase of the risk of dryout can be expected also for those fuel rods which surround the fuel rods which have a smaller cross-section area in their upper part than in their lower part. This increased risk of dryout exists in the upper part of the fuel assembly, where the water is in a two-phase state with so-called annular flow.

It is known, for example from the above-mentioned US specification, to influence the flow above the part-length fuel rods by various devices in order thus to improve the dryout conditions in the surrounding parts of the fuel bundle. These devices are all arranged in the annular-flow region above the part-length fuel rods. The improvement achieved therefore takes place at the expense of an increased pressure drop in the upper part of the fuel assembly, which in turn leads to a deterioration of the stability properties of the fuel assembly.

### THE OBJECT OF THE INVENTION

The invention aims to reduce the risk of dryout of a fuel assembly comprising both full-length and part-length fuel rods, or both fuel rods with a constant cross-section area and fuel rods which have a smaller cross-section area in their upper part than in their lower part, while maintaining or improving the stability properties.

What characterizes a fuel assembly according to the invention will become clear from the appended claims.

According to the present invention, the flow resistance is increased locally along the part-length fuel rods, resulting in a restriction of the coolant flow in these fuel rods. The part-length rods are arranged in the lower part of the fuel assembly where the margins with respect to dryout are large. A restriction of the flow increases the risk of dryout in the immediate vicinity of the restriction, but since the margins are so good, a restriction of the flow may be allowed without the risk of dryout becoming too great. The result of the restriction is a redistribution of the coolant flow and the enthalpy in favour of the other parts of the fuel bundle where the need is greater and hence the dryout effect can be increased. By locating the restriction in the lower part of the fuel assembly, that is, that part of the fuel assembly which comprises the part-length fuel rods, a distribution of the pressure drop which is advantageous with respect to hydraulic stability is obtained.

An increase of the flow resistance occurs at the part-length fuel rods, at least in certain cross sections in the lower part of the fuel assembly. By the flow resistance is meant the flow resistance per unit of surface.

What is stated above applies also to fuel rods which have a smaller cross-section area in their upper part.

### BRIEF DESCRIPTION OF THE DRAWINGS

The invention will be described in greater detail in the following with reference to the accompanying drawings, which show, by way of example, an advantageous embodiment of a fuel assembly according to the invention.
- Figure 1: shows a fuel assembly comprising full-length and part-length fuel rods.
- Figure 2: shows a cross section A-A through the fuel assembly in Figures 1 and 5.
- Figure 3: shows a first embodiment of a fuel assembly according to the invention.
- Figure 4: shows a second embodiment of the invention.
- Figure 5: shows a fuel assembly comprising fuel rods with a constant cross-section in the longitudinal direction, and fuel rods comprising an upper part with a relatively smaller cross-section area and a lower part with a relatively larger cross-section area.

### DESCRIPTION OF THE PREFERRED EMBODIMENTS

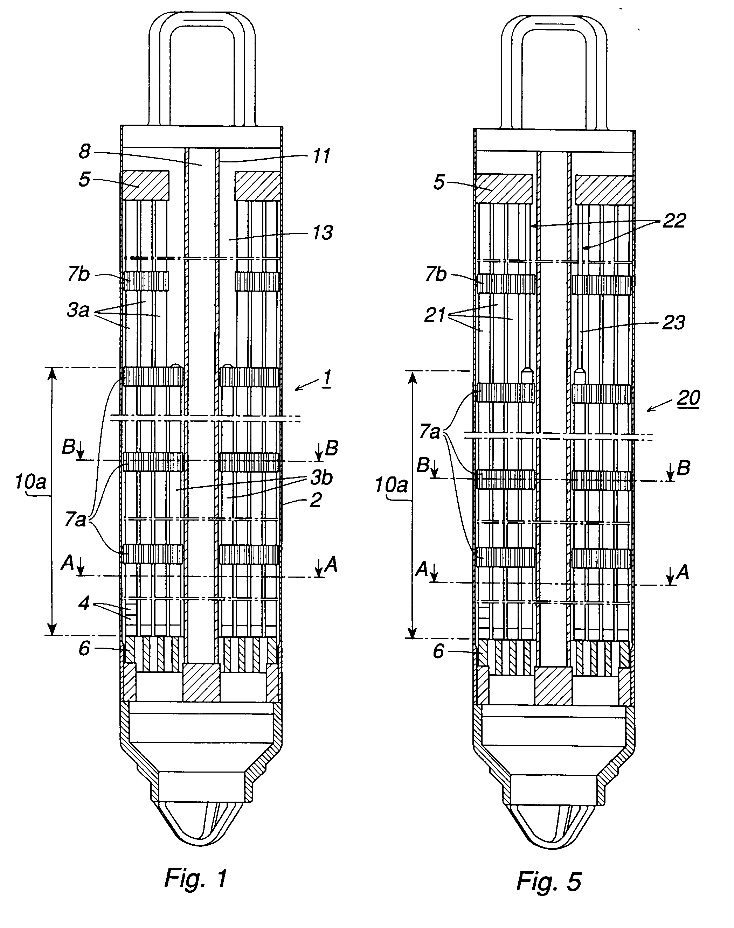

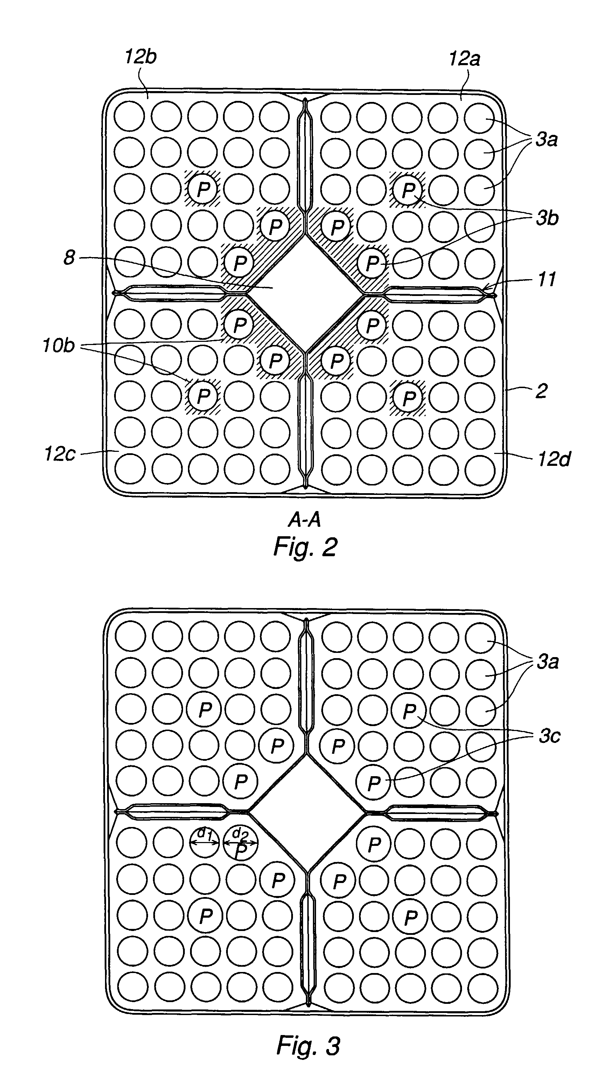

Figures 1 and 2 show a fuel assembly 1 to which the present invention can advantageously be applied. Figure 2 is a cross section A-A through the lower part of the fuel assembly in Figure 1. The fuel assembly is of boiling-water type and comprises a long tubular container, of rectangular cross section, referred to as a fuel channel 2. The fuel channel 2 is open at both ends, thus forming a through-going flow passage through which water flows. The fuel channel 2 is provided with a hollow support means 11 of cruciform cross section, which is secured to the four walls of the fuel channel. The support means comprises four hollow wings and a hollow enlarged cruciform centre. The support means 11 forms a vertical cruciform channel 8 through which non-boiling water flows upwards through the fuel assembly. The fuel channel 2 with support means 11 surround four vertical channel-formed parts 12a - 12d, so-called sub-channels, with a substantially square cross section. Each sub-channel contains a fuel bundle comprising a plurality of fuel rods 3a, 3b arranged in parallel. A fuel rod comprises a number of cylindrical pellets 4 of uranium dioxide, stacked on top of each other and enclosed in a cladding tube of Zircaloy.

The fuel rods 3a, 3b are arranged in a symmetrical 5x5 grid in which all the fuel rod positions except one are occupied by fuel rods. The non-occupied fuel rod position is located inside the cruciform centre of the support means. The fuel rods are of two different types, full-length fuel rods 3a and part-length fuel rods 3b. The part-length fuel rods 3b have a length which at least corresponds to half the length of the fuel assembly, but may constitute as much as 80% of the length of the fuel assembly. That part of the fuel assembly in which the part-length fuel rods are arranged are referred to in this patent application as the lower part 10a of the fuel assembly. Each sub-bundle comprises three part-length fuel rods 3b. Part-length fuel rods are marked with a P in this figure and in the following figures.

All the fuel rods 3a, 3b in a fuel bundle are retained at the bottom by a bottom tie plate 6. The full-length fuel rods 3a in the fuel bundle are retained at the top by a top tie plate 5. The fuel rods are kept spaced apart from each other by means of spacers 7a, 7b and are thus prevented from bending or vibrating when the reactor is in operation. In the lower part 10a of the fuel assembly, the fuel rods 3a, 3b are kept in position by the spacers 7a and in the upper part of the fuel assembly the fuel rods 3a are kept in position by spacers 7b. The part-length fuel rods 3b terminate below the top tie plate 5, usually in or in the vicinity of a spacer. The spaces between the fuel rods within each sub-channel are traversed by water.

According to the invention, a restriction of the flow is introduced in the lower part of the fuel assembly, locally along the part-length fuel rods. In Figure 2, the region in which a restriction is suitably arranged is marked 10b. The restriction of the coolant flow is performed adjacent to each one of the part-length fuel rods. The restriction is only arranged on a level with the part-length rods. Above the part-length fuel rods, no restriction of the flow takes place.

Figure 3 shows a first embodiment of the invention in which the restriction is achieved by designing the part-length rods 3c with a larger diameter d₂ than the full-length fuel rods which have a diameter d₁. In this embodiment, d₁=9.5 mm and d₂=11mm. This embodiment has the advantage that the thicker part-length rods compensate for the reduced uranium weight which is caused by the part-length rods. It also provides a possibility of making the part-length rods even shorter while maintaining the uranium weight, which thus further reduces the pressure drop in the upper part of the fuel assembly. In one embodiment, the part-length fuel rods have a constant diameter in their longitudinal direction. In another embodiment, the part-length fuel rods have two different diameters, a larger diameter in the lower part and a smaller diameter in the upper part, both of them being larger than the diameter of the full-length rods. The fuel assembly may, of course, also comprise one or more full-length fuel rods with a larger diameter than the other full-length fuel rods. The important feature in the invention is that the majority of the full-length fuel rods have a diameter which is smaller than that of the part-length fuel rods.

Another way of restricting the flow is to provide at least the majority of the spacers 7a which are arranged adjacent to the part-length rods with means which increase the flow resistance in the vicinity of the part-length rods. In principle, there are infinitely many possibilities of increasing the flow resistance locally in a spacer, for example by using thicker material, mixing vanes which divert the flow and extended structures. What is suitable depends on the type of spacer and the rod positions in the spacer in question. To achieve the desired effect with respect to the flow redistribution, the flow resistance locally in the spacers may need to be increased two to five times.

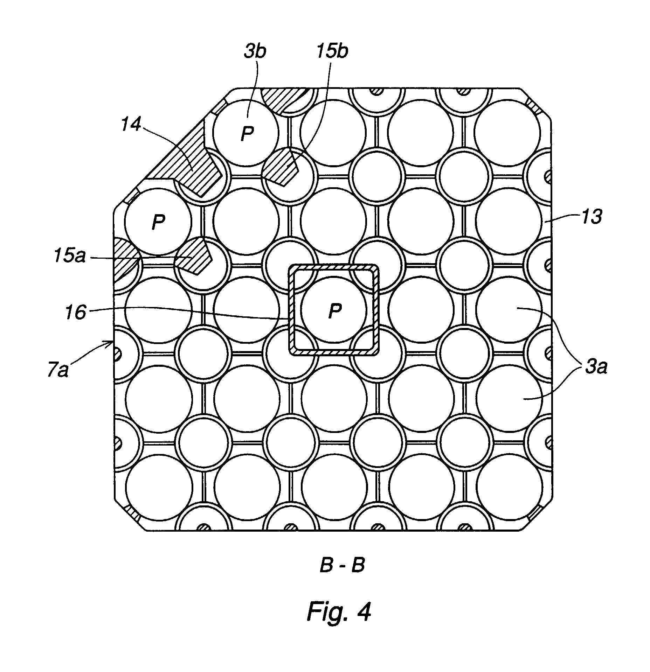

Figure 4 shows an example of a spacer 7a in which the flow resistance in the vicinity of the part-length rods has been increased by different means. The spacer 7a consists of an orthogonal grid structure of spacer cells 13. Each spacer cell is intended to position a fuel rod 3a or 3b running therethrough. The flow resistance in the vicinity of the part-length rods has increased partly by making an existing vane 14 larger - and hence more blocking - than the corresponding vane in the spacer 7b, partly by introducing new vanes 15a and 15b in the vicinity of the part-length rods and partly by surrounding a spacer cell, which in turn surrounds a part-length rod, with a welded-in square sleeve 16. The sleeve 16 may be provided with slits and bent edges to further increase the resistance. Another way to restrict the flow is to arrange specially designed elongated sleeves on top of and possibly also below the spacer cells belonging to the part-length rods. Swedish patent application SE-A-9303583-0 corresponding is US-A-5 666 389 shows a plurality of alternative ways of increasing the flow resistance locally in the spacer. For example, a spacer is shown in which the spacer cells in their lower edge have been given differentiated lengths.

A combination of the two embodiments shown in Figures 3 and 4 is also feasible.

Figure 5 shows a fuel assembly 20 to which the invention can be advantageously applied. The fuel assembly 20 comprises fuel rods of two different types, namely, fuel rods 21 of uniform thickness, the cross section of which is substantially constant along the whole of their vertical length, and tapering fuel rods 22 which comprise an upper part 23 with a relatively smaller cross-section area and a lower part 24 with a relatively larger cross-section area. All the fuel rods in the fuel bundle are retained at the top by a top tie plate 5 and at the bottom by a bottom tie plate 6. The fuel rods 21, the lower part 24 of the fuel rods 22 are kept spaced apart from each other by means of spacers 7a. In the upper part of the fuel assembly, the fuel rods 22 are kept spaced apart from each other by means of spacers 7b. That part of the fuel assembly in which the lower part 24 of the fuel assembly 20 is arranged is referred to as the lower part 10a of the fuel assembly.

According to the invention, a restriction of the flow is introduced locally along the lower part of the tapering fuel rods. The restriction is arranged in the region marked 10b in Figure 2. In this embodiment, the designation P in Figure 2 means a tapering fuel rod. The restriction occurs only in the region from the bottom plate to the level where the tapering begins. The restriction may be arranged in the same way as for the fuel assembly with part-length rods which has been described above. The lower part of the tapering rod may have a diameter which is larger than the rods of uniform thickness, as shown in Figure 3, or one or more of the spacers 7a arranged on a level with the lower part may be designed such that the flow is restricted at the tapering rods as shown in Figure 4.

## Claims

1. A fuel assembly for a boiling water reactor comprising
a first group of fuel rods (3a, 21) which are full-length rods and which have a substantially constant cross-section area in their longitudinal direction,
a second group of fuel rods including part-length fuel rods (3b) arranged in a lower part (10a) of the fuel assembly, or fuel rods (22) the cross-section area of which in an upper part of the fuel assembly is smaller relative to the cross-section area in the lower part (10a) of the fuel assembly,
a plurality of spacers (7a, 7b) arranged at different levels in the fuel assembly to retain the fuel rods,
a fuel channel (2) surrounding the fuel rods and arranged for connection to a coolant intended to flow through the fuel assembly, **characterized** in that it further comprises flow restricting means (3c, 14, 15a, 15b, 16) for restricting the flow of coolant, the flow restricting means are arranged in the lower part (10a) of the fuel assembly in a region (10b) at, at least one of, the fuel rods belonging to the second group, whereby in the lower part of the fuel assembly the flow resistance at, the at least one of the fuel rods (3b, 22) in the second group is greater than the flow resistance at the fuel rods (3a, 21) in the first group.

2. A fuel assembly according to claim 1, **characterized** in that the means (3c) for restricting the flow includes fuel rods from the second group, which in the lower part (10a) of the fuel assembly have a cross-section area (d₂) which is larger than the cross-section area (d₁) of the fuel rods in the first group.

3. A fuel assembly according to claim 1 or 2, **characterized** in that at least certain of the flow-restricting means (14, 15a, 15b, 16) are arranged on the spacers (7a).

## Patentansprüche

1. Brennstoffvorrichtung für einen Siedewasserreaktor mit
einer ersten Gruppe von Brennstäben (3a, 21), die volle Länge aufweisen und einen im wesentlichen unveränderten Querschnitt in ihrer Längsrichtung haben,
einer zweiten Gruppe von Brennstäben mit teillangen Brennstäben (3b), die im unteren Bereich der Brennstoffvorrichtung angeordnet sind, oder Brennstäben (22), deren Querschnitt in einem oberen Bereich der Brennstoffvorrichtung kleiner ist verglichen mit dem Querschnittsbereich im unteren Bereich (10a) der Brennstoffvorrichtung,
eine Mehrzahl von auf verschiedenen Ebenen in der Brennstoffvorrichtung angeordneten Distanzhaltern (7a, 7b) zum Festhalten der Brennstäbe,
einen die Brennstäbe umschliessenden Brennstoffkanal (2), der für den Anschluß einer zum Durchströmen der Brennstoffvorrichtung vorgesehene Kühlflüssigkeit vorgesehen ist, **dadurch gekennzeichnet,** da**ß** sie außerdem strömungsdrosselnde Elemente (3c, 14, 15a, 15b, 16) umfaßt um den Kühlflüssigkeitsstrom zu drosseln, wobei die strömungsdrosselnden Elemente im unteren Bereich (10a) der Brennstoffvorrichtung in einem Bereich (10b) an mindestens einem der zur zweiten Gruppe gehörenden Brennstäbe angeordnet sind, wodurch der Strömungswiderstand im unteren Bereich der Brennstoffvorrichtung an mindestens einem der Brennstäbe (3b, 22) der zweiten Gruppe größer ist als der Strömungswiderstand an den Brennstäben (3a, 21) der ersten Gruppe.

2. Brennstoffvorrichtung gemäß Patentanspruch 1, **dadurch gekennzeichnet,** daß das Element (3c) zum Drosseln der Strömung Brennstäbe aus der zweiten Gruppe umfaßt, die im unteren Bereich (10a) der Brennstoffvorrichtung einen Querschnittsbereich (d₂) aufweisen, der größer ist als der Querschnittsbereich (d₁) der Brennstäbe der ersten Gruppe.

3. Brennstoffvorrichtung gemäß Patentanspruch 1 oder 2, **dadurch gekennzeichnet,** daß mindestens einige der strömungsdrosselnden Elemente (14, 15a, 15b 16) an den Distanzhaltern (7a) angeordnet sind.

## Revendications

1. Assemblage combustible pour un réacteur à eau bouillante, comportant
un premier groupe de crayons (3a, 21) combustibles qui sont des crayons de longueur complète et qui ont une surface de section transversale sensiblement constante suivant leur direction longitudinale,
un second groupe de crayons combustibles comportant des crayons (3b) combustibles de longueur partielle disposés dans une partie (10a) inférieure de l'assemblage combustible, ou des crayons (22) combustibles dont la surface de section transversale dans une partie supérieure de l'assemblage combustible est plus petite relativement que la surface de section transversale dans la partie (10a) inférieure de l'assemblage combustible,
une pluralité d'entretoises (7a, 7b) disposées à différents niveaux dans l'assemblage combustible pour maintenir les crayons combustibles,
un canal (2) de combustible entourant les crayons combustibles et prévu pour une connexion à un fluide de refroidissement destiné à s'écouler dans l'assemblage combustible, caractérisé en ce qu'il comporte en outre des moyens (3c, 14, 15a, 15b, 16) de restriction d'écoulement destinés à restreindre l'écoulement de fluide de refroidissement, les moyens de restriction d'écoulement étant disposés dans la partie (10a) inférieure de l'assemblage combustible dans une région (10b), à au moins l'un des crayons combustibles appartenant au second groupe, grâce à quoi dans la partie inférieure de l'assemblage combustible la résistance à l'écoulement audit au moins un crayon (3b, 22) combustible dans le second groupe est plus grande que la résistance à l'écoulement au crayon (3a, 21) combustible dans le premier groupe.

2. Assemblage combustible suivant la revendication 1, caractérisé en ce que les moyens (3c) destinés à restreindre l'écoulement comportent des crayons combustibles du second groupe, qui dans la partie (10a) inférieure de l'assemblage combustible ont une surface (d2) de section transversale qui est plus grande que la surface (d1) de section transversale des crayons combustibles dans le premier groupe.

3. Assemblage combustible suivant la revendication 1 ou 2, caractérisé en ce que au moins certains des moyens (14, 15a, 15b, 16) de restriction d'écoulement sont disposés sur les entretoises (7a).
